# EUROPEAN PATENT APPLICATION

(11) **EP 4 174 430 A1**
(43) Date of publication of application: **03.05.2023**
(21) Application number: 21205930.7
(22) Date of filing: 02.11.2021
(51) Int. Cl.: F28D 20/00

(54) **THERMAL ENERGY STORAGE DEVICE WITH OVERPRESSURE PROTECTION**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Pagelsen, Niels, 22303 Hamburg (DE)
(74) Representative: SGRE-Association

(57) **Abstract**

A heat storage device (100) for a thermal energy storage plant, the heat storage device (100) comprising:
a hollow housing (110) comprising an inlet (101) and an outlet (102) and a plurality of housing walls,
a storage material (150) for storing heat housed in the hollow housing (110) between the inlet (101), the outlet (102) and the plurality of housing walls (113, 114, 116),
the hollow housing (110) defining a fluid passage for the circulation of a heat transfer fluid (111) between the inlet (101) and the outlet (102) and through the storage material (150), the volume occupied by the storage material (150) being variable subject to temperature variations inside hollow housing (110), the plurality of housing walls (113, 114, 116) comprising at least a deformable wall (116) for compensating a volume variation of the storage material (150),
at least one restraining cable (130) active on the deformable wall (116), and
a tensioning element (120, 121, 122) for applying a tension to the restraining cable (130) so that the restraining cable (130) is pressed against the deformable wall (116).

## Description

### Field of invention

The present invention relates to storage devices for storing thermal energy.

### Art Background

It is known to store fluctuating electrical energy as heat inside heat storage devices. The electrical energy may be generated in renewable and/or traditional power plants running on fossil fuels. The electrical energy from such plants is stored in heat storage devices when the electricity demand is low. The stored heat is reconverted back to electrical energy in times when the demand is higher than the production. The heat storages are usually part of thermal energy storage plants which typically further comprise a heater, a steam generator, a steam turbine, a heat transporting fluid, a heat storage material inside the heat storage and a piping system. Other applications are known where heat is both used as input and output of the system, i.e. is stored inside the heat storage devices and given back when required. The storage material may be a granular material, for example comprising a plurality of stones. The storage material is housed inside a hollow housing extending between an inlet and an outlet. The inlet and an outlet need to be open to allow the flowing of a heat transfer fluid (HTF), which exchanges heat with the storage material.

The heat storage material inside of thermal energy storage devices is generally subject to expansion and contraction effects, in particular if the storage material is arranged as a packed bed. Several effects can be observed. Thermal cycling causes thermal expansion and contraction of the packed bed that directly follows the heating and cooling processes inside the storage device. Besides this cyclic behavior, a general contraction of the pebble bed can be observed over a longer time period. Due to re-arrangement of the particles, the pebble bed tends to a state of higher density, as gaps are filled during the re-arrangement. Depending on the storage material, this effect can be increased by breaking of individual particles. In this case, smaller particles would further reduce the pebble bed porosity and thus, cause a contraction of the pebble bed.

The volume of the heat storage material is therefore not constant. As a result, it has to be ensured that the heat storage chamber is able to accommodate these volume changes (cyclic and long term) to avoid gaps between the heat storage material and the chamber boundaries. Due to the gravitational force acting on the storage material, this gap would occur at the top of the storage chamber. Such a gap would lead to significant efficiency losses, since it offers a flow path of reduced resistance to the heat transfer fluid compared to the intended flow path of the heat transfer fluid through the heat storage material. A portion of the thermal energy entering the storage chamber during charge or discharge would simply bypass the storage material.

Various solutions for the above problem are described in the prior art.

WO 2017/055472 A1 discloses a heat exchange system with compensation of dimension change of the heat storage material by means of a vertically sliding ceiling. A sliding ceiling solution involves however the risk of jamming in which case the gap compensation would no longer work.

WO 2017/055345 A1 presents another solution involving the use of dimension adaption foil, the foil including wrinkles. One ballast layer with sand may be optionally provided. In WO 2019/096809 A1 a solution with a flexible cover layer is provided, so that the flexible layer is pressed onto the heat storage material. The flexible cover layer has the form of a mesh or is configured in the form of sheet-metal plates overlapping one another in an imbricated manner. Neither wrinkled foils nor flexible cover layers nor layers of sand or other ballast material are satisfactory measures to prevent the formation of gaps between the storage material and the ceiling structure. The solutions of the prior art require a high level of operational maintenance for avoiding undesired gaps at the top of the storage chamber.

There may be a need for providing a heat storage device where the volume variations of the heat storage material are compensated in an efficient manner and avoiding the above-mentioned inconveniences of the prior art.

### Summary of the Invention

This need may be met by the subject matter according to the independent claim. Advantageous embodiments of the present invention are described by the dependent claims.

According to a first aspect of the invention there is provided a heat storage device for a thermal energy storage plant, the heat storage comprising:
a hollow housing comprising an inlet, an outlet and a plurality of housing walls,
a storage material for storing heat housed in the hollow housing between the inlet, the outlet and the plurality of housing walls,
the hollow housing defining a fluid passage for the circulation of a heat transfer fluid between the inlet and the outlet and through the storage material, the volume occupied by the storage material being variable subject to temperature variations inside the hollow housing, the plurality of housing walls comprising at least a deformable wall for compensating a volume variation of the storage material,
at least one restraining cable active on the deformable wall, and
a tensioning element for applying a tension to the restraining cable so that the restraining cable is pressed against the deformable wall.

According to a second aspect of the invention there is provided a method of manufacturing a heat storage device for a thermal energy storage plant, the method comprising:
providing a hollow housing comprising an inlet, an outlet and a plurality of housing walls, the plurality of housing walls comprising at least a deformable wall for compensating a volume variation of the storage material,
inserting a storage material for storing heat housed in the hollow housing between the inlet, the outlet and the plurality of the housing walls,
circulating a heat transfer fluid between the inlet and the outlet and through the storage material, the volume occupied by the storage material being variable subject to temperature variations inside hollow housing,
providing at least one restraining cable active on the deformable wall, and
attaching a tensioning element for applying a tension to the restraining cable so that the restraining cable is pressed against the deformable wall.

As "storage material" it is meant any material having a convenient thermal capacity for storing thermal energy at a desired temperature range. The storage material my be a granular material, i.e. a conglomerate of discrete solid elements or particles, for example stones or rocks. The discrete solid elements which constitute the granular material may have a spheroidal shape or polyhedral shape, for example comprising a plurality of flat surfaces and/or curved surface. As "heat transfer fluid" it is meant any suitable fluid for transporting thermal energy, for example air.

According to the present invention, the tensile forces on the cable may be kept constant by providing constant forces through the tensioning element. Consequently, there is no need for retightening. The operational maintenance is therefore reduced, and a stable performance can be achieved. Furthermore, damage to storage components that could potentially arise from (especially hot fluid) bypass flows through undesired gaps can be avoided. The deformable wall remains relatively accessible through the restraining cable(s). This allows for easy maintenance works, e.g. in case of damage to the deformable wall.

According to embodiments of the present invention, the tensioning element may comprise a tensioning weight or a tensioning spring. The tensioning element may comprise any other element for applying a tension to the restraining cable so that the restraining cable is pressed against the deformable wall, for example a ratchet or similar device.

According to other embodiments of the present invention, the restraining cable is elastic, and the tensioning element comprises at least a rigid link for attaching an end of the restraining cable to a fixed support.

According to embodiments of the present invention, the heat storage device may comprise a plurality of restraining cables. Thus, the risk of jamming of the gap compensation construction is reduced significantly. Even in case that one cable is no longer pressing onto the storage ceiling due to a malfunction, there are multiple remaining cables which are still performing as desired, and the overall force reduction is therefore limited.

The above-defined aspects and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic longitudinal sectional view of a heat storage device, according to the present invention,
- Fig. 2: shows a schematic cross-sectional view of a heat storage device, according to a first embodiment of the present invention,
- Fig. 3: shows a more detailed view of the heat storage device according to the first exemplary embodiment of the present invention,
- Fig. 4: illustrates a possible variant of the first exemplary embodiment of Fig. 3,
- Fig. 5: shows a schematic cross-sectional view of a heat storage device, according to a second embodiment the present invention,
- Fig. 6: shows a schematic cross-sectional view of a heat storage device, according to a third embodiment the present invention,
- Fig. 7: shows a schematic cross-sectional view of a heat storage device, according to a fourth embodiment the present invention,
- Fig. 8: shows a schematic top view of a heat storage device according to the present invention, showing a first possible arrangement of restraining cables,
- Fig. 9: shows a schematic top view of a heat storage device according to the present invention, showing a second possible arrangement of restraining cables,
- Fig. 10: shows a schematic top view of a heat storage device according to the present invention, showing a third possible arrangement of restraining cables,
- Fig. 11: shows a schematic top view of a heat storage device according to the present invention, showing a fourth possible arrangement of restraining cables,
- Fig. 12: shows a schematic top view of a heat storage device according to the present invention, showing a fifth possible arrangement of restraining cables.

### Detailed Description

The illustrations in the drawings are schematically. It is noted that in different figures, similar or identical elements are provided with the same reference signs.

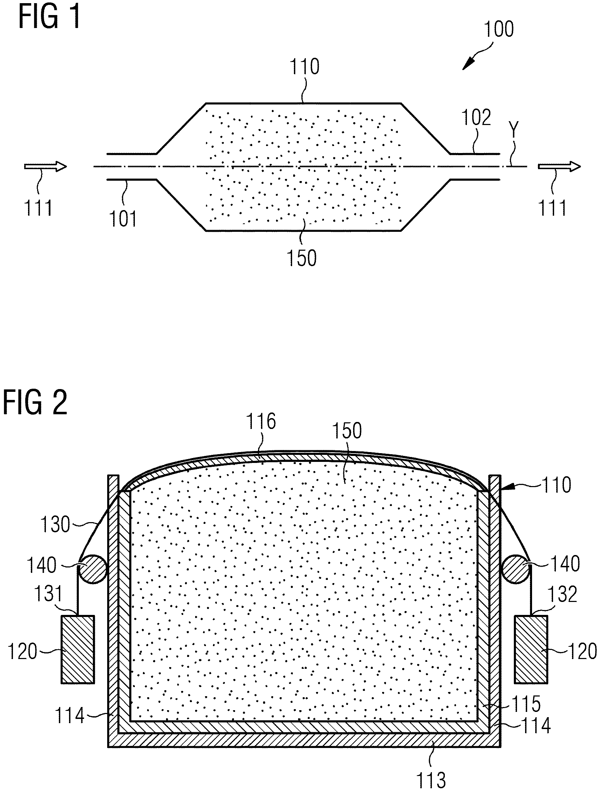

**Figure 1** schematically shows a longitudinal section of a heat storage device 100 for a thermal energy storage plant (not shown as whole). The heat storage 100 extends along a longitudinal axis Y and comprises a hollow housing 110 comprising an inlet 101 and an outlet 102 and a storage material 150 for storing heat. The storage material may be granular. The storage material 150 is housed in the hollow housing 110 between the inlet 101 and the outlet 102. The storage material 150 comprises a plurality of discrete solid elements or particles, for example stones or rocks, having a convenient thermal capacity for storing thermal energy at a desired temperature range. The storage material 150 occupies at least a portion of the volume of the hollow housing 110 comprised between the inlet 101 and the outlet 102. The volume occupied by the storage material 150 is variable subject to temperature variations inside hollow housing 110. The hollow housing 110 defines a fluid passage 111 along the longitudinal axis Y for the circulation of a heat transfer fluid between the inlet 101 and the outlet 102 and through the storage material 150.

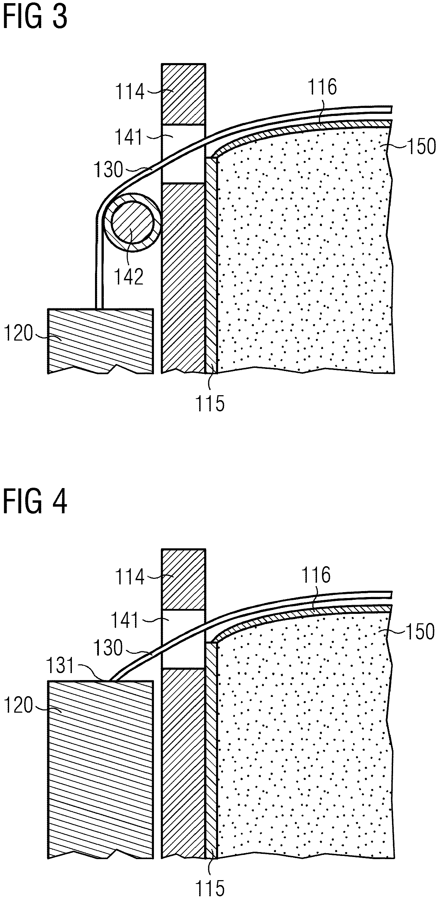

**Figures 2** and **3** schematically show a cross section on a plane orthogonal to the longitudinal axis Y of the heat storage device 100, according to a first embodiment. The hollow housing 110 comprises a plurality of housing walls 113, 114, 116. The plurality of housing walls 113, 114, 116 comprises at least a deformable wall 116 for compensating a volume variation of the storage material 150. The hollow housing 110 comprises a bottom wall 113, a ceiling wall 116 and one or more lateral wall (two lateral walls 114 are shown in the cross section view of figure 1) extending between the bottom wall 113 and the ceiling wall 116. In operation, the ceiling wall 116 is at a higher level than the bottom wall 113, with respect to the gravity direction. In the first embodiment, the ceiling wall 116 is the deformable wall, which compensates the volume variation of the storage material 150. In other embodiments (not shown), the ceiling wall 116 may comprise the deformable wall, which compensates the volume variation of the storage material 150. In other embodiments (not shown), the deformable wall according to the present invention may be provided in other positions, for example on the lateral walls 114. In the first embodiment, the flexible ceiling wall 116 comprises a plurality of layers. Each layer may include a respective material, such as sand, gravel, insulating wool and/or metal foils. The flexible ceiling wall 116 may optionally include an impermeable foil layer, which may be used as the outermost layer. The hollow housing 110 may further comprise a plurality of insulation layers 115 between the bottom wall 113 and the storage material 150 and/or between the lateral wall 114 and the storage material 150.

The heat storage device 100 further comprises one or more restraining cables 130 (one restraining cable 130 is shown in the cross section view of figure 1) active on the deformable wall 116. The restraining cable(s) 130 may be positioned over the deformable wall 116. Alternatively, the restraining cable 130 can be arranged within the flexible wall 116, in between the layers. The heat storage device 100 further comprises a tensioning element 120 for applying a tension to the restraining cable 130 so that the restraining cable 130 is pressed against the deformable wall 116. In turn, the deformable wall 116 is pressed towards the storage material 150 by the restraining cable 130. In the first embodiment, the restraining cable 130 is to be considered rigid, or the change of length of the restraining cable 130 is to be considered negligible for the purposes of the present invention. The restraining cable 130 may be a circular or rectangular wire, a belt-like structure, cord or strap. A single restraining cable 130 may be used in the form of a wide belt covering the entire deformable wall 116. Possible materials for the restraining cable 130 are steel, textile fabrics or synthetics.

In the first embodiment, the tensioning element 120 comprises two tensioning weights 120 respectively attached to the ends 131, 132 of the restraining cable 130. The tensioning weights 120 may comprise concrete or metal blocks, metal cages filled with rocks, water tanks or tanks filled with sand or similar. The gravitational force acting on the tensioning weights 120 causes a constant tensioning of the restraining cable 130, which in turn push down on the deformable wall 116 and compensate gaps between the deformable wall 116 and the storage material 150.

The heat storage device 100 comprises a guide 140 for guiding the restraining cables 130 between the deformable wall 116 and the tensioning element 120. The guide 140 may comprises at least a guiding hole 141 across the lateral wall 114. The restraining cable 130 passes through the guiding hole 141. Alternatively, the restraining cable 130 may be routed over the lateral wall 114. The guide 140 may further include one or more support elements 142 attached to the outside of the hollow housing 110, for example to the lateral wall 114. The support elements 142 may be used to guide the restraining cable 130 between the deformable ceiling wall 116 and the tensioning element 120. The support element 142 is a rigid or movable element with the purpose of guiding the restraining cable 130 and preventing a shifting of its position. The support element 142 may be formed as a pulley or a guiding track or a rod or other rigid element (e.g. triangular or cylindrical) attached to the lateral wall 114.

**Figure 4** schematically shows a possible variant for the heat storage 100 of figure 3, where the support element 142 is not present and the tensioning weights 120 is attached to the ends 131, 132 of the restraining cable 130 at a position adjacent to the guiding hole 141. In such embodiment, the tensioning weight 120 is in contact with the outside of the lateral wall 114. Guiding tracks on the tensioning weight 120 and/or the lateral wall 114 or similar features may be provided to improve the movement of the tensioning weight 120 along the lateral wall 114.

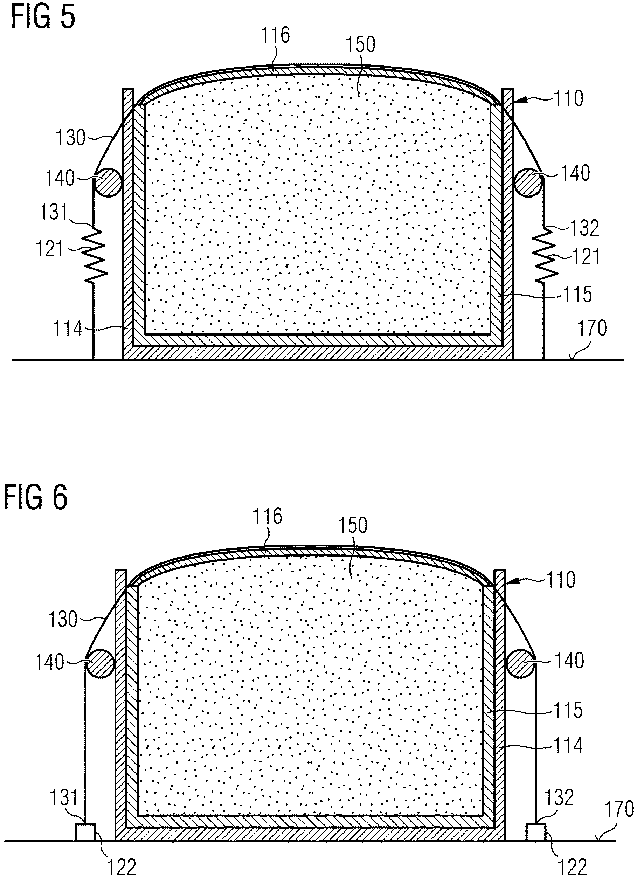

**Figure 5** schematically shows a second embodiment of the heat storage 100. The embodiment of figure 5 differentiates itself from the embodiment of figures 2 and 3 in that the tensioning elements comprise two tensioning springs 121 respectively attached to the ends 131, 132 of the restraining cable 130. The tensioning springs 121 are also attached to a fixed support 170, on which the heat storage device 100 is supported. The elastic force acting on the tensioning springs 121 causes a constant tensioning of the restraining cable 130, which in turn push down on the deformable wall 116 and compensate gaps between the deformable wall 116 and the storage material 150.

**Figure 6** schematically shows a third embodiment of the heat storage 100. The embodiment of figure 6 differentiates itself from the embodiment of figures 2 and 3 in that the restraining cable 130 is elastic and the tensioning elements comprises two rigid links 122 for attaching the ends 131, 132 of the restraining cable 130 to the fixed support 170, on which the heat storage device 100 is supported. The elastic force acting on the restraining cable 130 causes a constant tensioning thereof, which in turn push down on the deformable wall 116 and compensate gaps between the deformable wall 116 and the storage material 150.

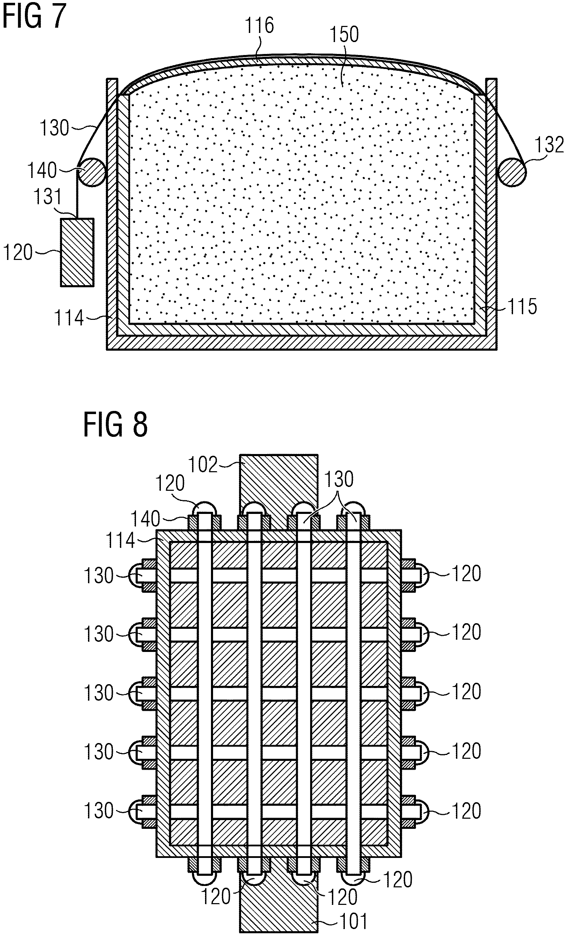

**Figure 7** schematically shows a fourth embodiment of the heat storage 100. The embodiment of figure 7 differentiates itself from the embodiment of figures 2 and 3 in that only one tensioning element 120 (tensioning weight 120) is attached to one end 131 of the restraining cable 130, the other end 132 of the restraining cable 130 being fixed to a respective support element 142 or, alternatively, to the fixed support 170 or to the hollow housing 110, for example to a lateral wall 114.

**Figure 8** shows a top view of the heat storage device 100 comprising a plurality of restraining cables 130. The hollow housing 110 is rectangular in shape in the top view of figure 8. The heat storage device 100 of figure 8 comprises two pluralities of restraining cables 130, the restraining cables 130 of the first plurality being parallel to each other and to two sides of the rectangular hollow housing 110, the second plurality being parallel to each other and to the other two sides of the rectangular hollow housing 110. The different orientations of the two pluralities of restraining cables 130 provides an angle of 90 degrees between them, providing good covering of the entire deformable wall 116. According to another embodiment the plurality of restraining cables 130 may be at least partially connected to form a net and the tensioning elements 120, 121, 122 may be attached at various points of the net.

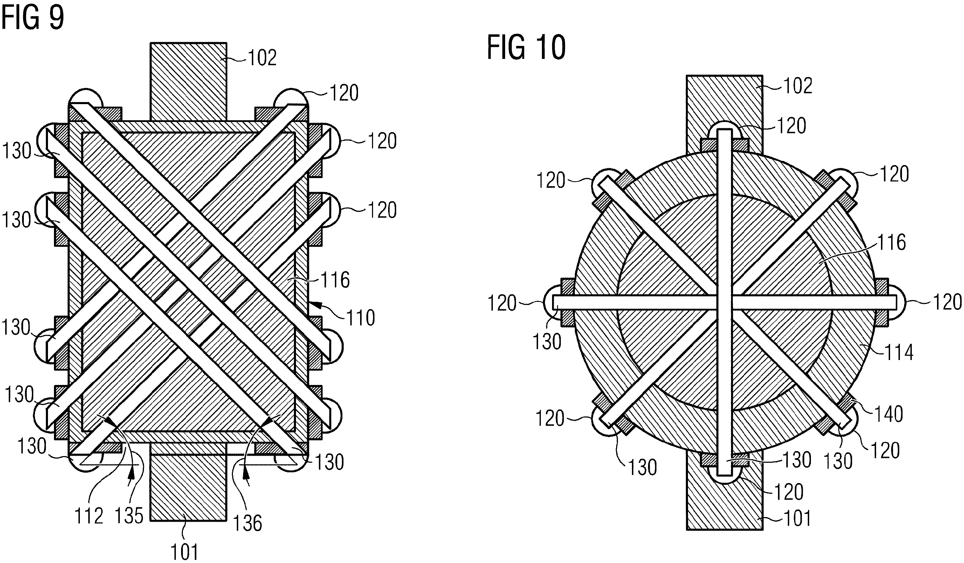

**Figure 9** shows a top view of the heat storage device 100 comprising a plurality of restraining cables 130, oriented according to a second possible arrangement of restraining cables 130. The heat storage device 100 of figure 9 comprises two pluralities of restraining cables 130, the restraining cables 130 of the first plurality being parallel to each other and inclined with respect to a bottom side 112 (defined with reference to figure 9 as the lower horizontal side) of the rectangular hollow housing 110 according to an angle 135, comprised between 0 degree and 90 degrees. The second plurality of restraining cables 130 are parallel to each other and inclined with respect to the bottom side 112 of the rectangular hollow housing 110 according to another angle 136, having opposite value with respect to the orientation angle 135 of the first plurality. The different orientations of the two pluralities of restraining cables 130 provides an angle of 0 to 180 degrees between them, which may be optimally defined for providing good covering of the entire deformable wall 116.

**Figure 10** shows a top view of the heat storage device 100 comprising a plurality of restraining cables 130. The hollow housing 110 is circular in shape in the top view of figure 10. The heat storage device 100 of figure 10 comprises a plurality of restraining cables 130 (four restraining cables 130), each being oriented according to a respective diameter of the hollow housing 110. The restraining cables 130 in figure 10 are regularly arranged about the center of the hollow housing 110, an angle of 45 degrees being provided between two adjacent restraining cables 130.

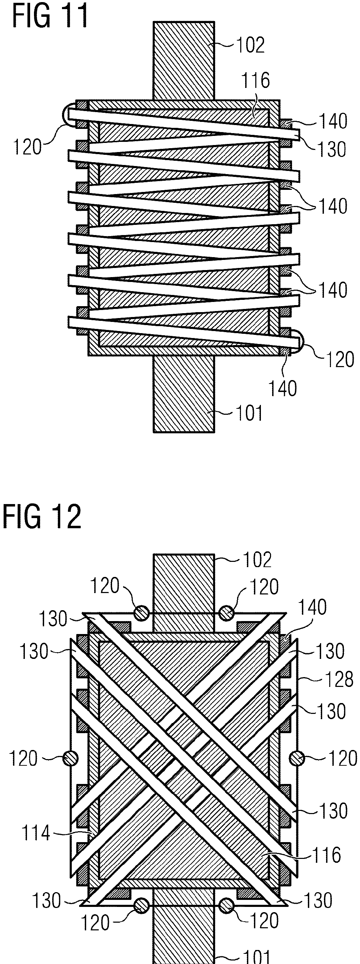

**Figure 11** shows a top view of the heat storage device 100 comprising only one restraining cable 130, which is routed around support elements 142 provided at two opposite sides of the hollow housing 110, in a manner comparable to that of a shoelace. Potentially a single restraining cable 130 of a convenient length may be used to cover the entire deformable wall 116. The same cable layout may be provided in embodiment comprising a plurality of restraining cables 130.

**Figure 12** shows a variant of the heat storage device 100 of figure 9, where the pluralities of restraining cables 130 are attached to a common tensioning element. The restraining cables 130 are attached to a common bar or similar object 128, to which one or more tensioning weights 120 or tensioning springs 120 may be attached. The required number of tensioning weights or springs can thus be reduced compared to other embodiments. The bar 128 may be arranged on the outside or the inside of the hollow housing 110. Positioning the bar 128 inside the hollow housing 110 has the advantage that the restraining cables 130 do not need to be routed through the holes 141 in the hollow housing 110. In such embodiment, a secondary cable can be attached to the bar 128, only the secondary cable(s) requiring a routing through the holes 141, or over the deformable wall 116, where the tensioning element is attached to the secondary cable.

## Claims

1. A heat storage device (100) for a thermal energy storage plant, the heat storage device (100) comprising:
a hollow housing (110) comprising an inlet (101), an outlet (102) and a plurality of housing walls (113, 114, 116),
a storage material (150) for storing heat housed in the hollow housing (110) between the inlet (101), the outlet (102) and the plurality of the housing walls (113, 114, 116),
the hollow housing (110) defining a fluid passage for the circulation of a heat transfer fluid (111) between the inlet (101) and the outlet (102) and through the storage material (150), the volume occupied by the storage material (150) being variable subject to temperature variations inside hollow housing (110), the plurality of housing walls (113, 114, 116) comprising at least a deformable wall (116) for compensating a volume variation of the storage material (150),
wherein the heat storage device (100) further comprises:
at least one restraining cable (130) active on the deformable wall (116), and
a tensioning element (120, 121, 122) for applying a tension to the restraining cable (130) so that the restraining cable (130) is pressed against the deformable wall (116).

2. The heat storage device (100) according to claim 1, wherein the tensioning element (120, 121, 122) comprises at least a tensioning weight (120) attached to an end (131, 132) of the restraining cable (130).

3. The heat storage device (100) according to claim 1, wherein the tensioning element (120, 121, 122) comprises at least a tensioning spring (121) attached to an end (131, 132) of the restraining cable (130).

4. The heat storage device (100) according to claim 2 or 3, wherein the restraining cable (130) is rigid.

5. The heat storage device (100) according to claim 1, wherein the restraining cable (130) is elastic and the tensioning element (120, 121, 122) comprises at least a rigid link (122) for attaching an end (131, 132) of the restraining cable (130) to a fixed support (170).

6. The heat storage device (100) according to any of the previous claims, wherein the hollow housing (110) comprises at least a bottom wall (113), a ceiling wall (116) and at least one lateral wall (114) extending between the bottom wall (113) and the ceiling wall (116), the ceiling wall (116) being with respect to the gravity direction at a higher level than the bottom wall (113), the ceiling wall (116) being deformable for compensating the volume variation of the storage material (150).

7. The heat storage device (100) according to claim 6, wherein the ceiling flexible wall (116) comprises a plurality of layers, the plurality of layers including any of a sand layer, insulating wool layer, foils layer or impermeable layer.

8. The heat storage device (100) according to claim 6, wherein the hollow housing (110) comprises a plurality of insulation layers (115) between the bottom wall (113) and the storage material (150) and/or between the lateral wall (114) and the storage material (150).

9. The heat storage device (100) according to any of the previous claims, wherein the heat storage device (100) comprises a guide (140) for guiding the restraining cables (130), the guide (140) being comprised between the deformable wall (116) and the tensioning element (120, 121, 122).

10. The heat storage device (100) according to claim 9, wherein the guide (140) comprises at least a guiding hole (141) on a lateral wall (114), the restraining cable (130) passing through the guiding hole (141).

11. The heat storage device (100) according to any of the previous claims, wherein the heat storage device (100) comprises a plurality of restraining cables (130), at least two of the restraining cables (130) being arranged on the deformable wall (116) according to different orientations.

12. The heat storage device (100) according to claim 11, wherein the heat storage device (100) comprises at least two pluralities of restraining cables (130), the restraining cables (130) of a first plurality being parallel to each other and being arranged on the deformable wall (116) according to a different orientation with respect to the restraining cables (130) of another plurality of restraining cables (130).

13. The heat storage device (100) according to claim 11 or 12, wherein the plurality of restraining cables (130) are at least partially connected to form a net.

14. The heat storage device (100) according to claim 11 or 12, wherein the plurality of restraining cables (130) is attached to a common tensioning element (120, 121, 122).

15. A thermal energy storage plant comprising the heat storage (100) according to any of the previous claims.

16. A method of manufacturing a heat storage device (100) for a thermal energy storage plant, the method comprising:
providing a hollow housing (110) comprising an inlet (101), an outlet (102) and a plurality of housing walls (113, 114, 116), the plurality of housing walls (113, 114, 116) comprising at least a deformable wall (116) for compensating a volume variation of the storage material (150),
inserting a storage material (150) for storing heat housed in the hollow housing (110) between the inlet (101), the outlet (102) and the plurality of the housing walls (113, 114, 116),
circulating a heat transfer fluid (111) between the inlet (101) and the outlet (102) and through the storage material (150), the volume occupied by the storage material (150) being variable subject to temperature variations inside hollow housing (110),
providing at least one restraining cable (130) active on the deformable wall (116), and
attaching a tensioning element (120, 121, 122) for applying a tension to the restraining cable (130) so that the restraining cable (130) is pressed against the deformable wall (116).
